# EUROPÄISCHE PATENTSCHRIFT

(11) **EP 1 046 451 B1**
(45) Veröffentlichungstag und Bekanntmachung des Hinweises auf die Patenterteilung: **23.01.2002**
(21) Anmeldenummer: 00105796.7
(22) Anmeldetag: 18.03.2000
(51) Int. Cl.: B23D 31/00, B23D 29/02

(54) **Werkzeug zum Entfernen der Abdeckung von Nuten an Profilmaterialien**
Apparatus for breaking out parts of profiled stock
Appareil pour entailler des profilés

(30) Priorität: 19.04.1999 DE 29906796 U
(43) Veröffentlichungstag der Anmeldung: 25.10.2000
(73) Patentinhaber: MiniTec Maschinenbau GmbH, 66914 Waldmohr (DE)
(72) Erfinder: Risch, Karl-Heinz, 57410 Gros Rederching (FR)
(74) Vertreter: Klein, Friedrich

(56) Entgegenhaltungen:
- CH-A- 111 606
- DE-U- 9 408 391
- FR-A- 2 343 566

## Beschreibung

Die Erfindung betrifft einen Werkzeug zum Entfernen der Abdeckung von Nuten an Profilmaterialien.

Mit Nuten versehene Profilmaterialien, insbesondere Aluminiumprofile sind häufig mit die entsprechenden Nuten überdeckenden Abdeckungen versehen, die dem Profilmaterial ein geschlosenes und damit gefälliges Aussehen verleihen. Diese Abdeckungen müssen jedoch bei der Verarbeitung und Montage der Profilmaterialien an all den Stellen entfernt werden, an denen beispielsweise Verbindungsmittel angebracht werden müssen. Solche Verbindungsmittel können sogenannte Profilverbinder sein, die beispielsweise zum Verbinden von in einem Winkel, vorzugsweise in einem rechten Winkel zueinander verlaufenden Profilabschnitten erforderlich sind. Auch kann es beispielsweise zum Einbau von Flächenelementen, oder zum Anbau von Linearführungen erforderlich sein, die Abdeckung der jeweiligen Nuten entlang der gesamten Länge eines Profilabschnittes vornehmen zu müssen.

Der Erfindung liegt die Aufgabe zu Grunde, ein Werkzeug zum Entfernen der Abdeckung von Nuten an Profilmaterialien oder an Abschnitten von diesen zu schaffen.

Diese Aufgabe wird erfindungdgemäß durch ein Werkzeug gelöst, das mindestens zwei vorzugsweise im Bereich seiner beiden Enden angeordnete Arbeitsbereiche aufweist, wobei der eine Arbeitsbereich im wesentlichen keilförmig ausgebildet ist, und der andere Arbeitsbereich mit einem zur Längsachse des Werkzeuges im wesentlichen parallel gerichteten Schlitz versehen ist.

Dabei kann mit dem den Schlitz aufweisenden Arbeitsbereich in einem Arbeitsgang eine der Länge des Schlitzes entsprechend lange Ausbrechung erzielt werden, während mit dem anderen Arbeitsbereich eine beliebig lange Ausbrechung gebildet werden kann, was gegebenenfalls in mehreren Schritten zu vollziehen ist.

Eine vorteilhafte Ausbildung des keilförmigen Arbeitsbereiches, die ein Aufhebeln der jeweiligen Nut ermöglicht, wobei das Werkzeug auf dem Grund der Nut abrollen kann, ergibt sich dadurch, daß die eine Begrenzungsfläche des keilförmigen Arbeitsbereiches eine im wesentlichen ebene Fläche ist, während die andere Begrenzungsfläche eine gewölbte Fläche ist.

Eine leichte Abfuhr des sich beim Ausbrechen der Abdeckung ergebenden Spanes der Abdeckung ergibt sich dann, wenn sich an die ebene Fläche des keilförmigen Arbeitsbereiches eine konkav gewölbte Fläche anschließt.

Die Länge der Ausbrechung der Nut läßt sich insbesondere dann, wenn diese am Ende eines Profilabschnittes anzubringen ist, leicht wiederholbar vorbestimmen, wenn die Länge des Schlitzes im wesentlichen der Länge der herzustellenden Ausbrechung entspricht.

Zur Führung des Werkzeuges ist es vorteilhaft, wenn dessen beide Arbeitsbereiche jeweils einen im wesentlichen prismatischen Querschnitt aufweisen, dessen Breite der Breite der auszubrechen-den Nuten entspricht.

Weitere Vorteile und Einzelheiten der Erfindung ergeben sich aus der nachfolgenden Beschreibung eines in der Zeichnung dargestellten Ausführungsbeispieles derselben.

Es zeigen:
- Fig. 1:: eine schaubildliche Darstellung des Werkzeuges;
- Fig. 2:: schaubildliche Darstellung des Werkzeuges beim Ausbrechen einer kurzen Länge einer Nut;
- Fig. 3:: eine schaubildliche Darstellung des Werkzeuges beim Ausbrechen einer größeren Länge einer Nut;

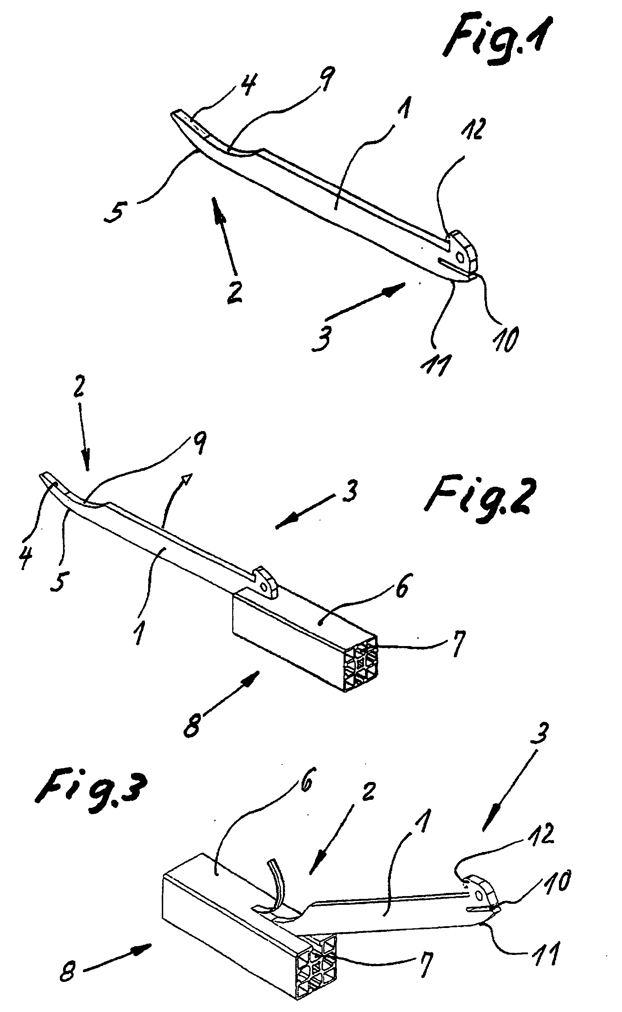

Das in Fig. 1 dargestellte Werkzeug 1 weist einen ersten Arbeitsbereich 2 und einen zweiten Arbeitsbereich 3 auf, die in den jeweiligen Endbereichen des Werkzeuges 1 angeordnet sind.

Der Arbeitsbereich 2 ist im wesentlichen keilförmig ausgebildet, wobei die in Fig.1 obere Begrenzungsfläche 4 eine ebene Fläche ist, während die in Fig. 1 untere Begrenzungsfläche 5 eine gewölbte Fläche ist, die ein Abrollen des Werkzeuges 1 auf dem Grund einer eine Abdeckung 6 aufweisenden Nut 7 eines Profilmaterials 8 ermöglicht. An die obere Begrenzungsfläche 4 schließt sich eine konkav gewölbte Fläche 9 an, die als Leitfläche für die Abfuhr des sich beim Ausbrechen einer Nut 7 ergebenden Spanes dienen kann.

Zum Ausbrechen einer Nut 7 beliebiger Länge wird der keilförmige Arbeitsbereich 2 des Werkzeuges 1 in aus Fig. 1 ersichtlicher Schräglage vom stirnseitigen Ende des Profilmaterials 8 in die Nut 7 eingeführt und sodann dessen Arbeitsbereich 3 nach unten gedrückt. Die untere Begrenzungsfläche 5 stützt sich beim Niederdrücken des Arbeitsbereiches 3 auf dem Grund der Nut 7 ab und rollt dabei gleichzeitig auf diesem ab. Hierdurch wird die Abdeckung 6 fortschreitend nach oben gedrückt und ausgebrochen.

Dieser Vorgang kann unter Nachschiebens des Werkzeuges 1 so oft wiederholt werden, bis entweder die gewünschte Ausbrechlänge der Nut 7 erreicht oder die Abdeckung 6 auf der ganzen Länge des Profilmaterials 8 ausgebrochen ist.

Da die Abdeckung 6 in den Randbereichen der Nut 7 nur 0,1 bis 0,2 mm dick ist, bricht die Abdeckung 6 relativ leicht und genau in den Randbereichen der Nut 7 aus. Dies kann noch dadurch unterstützt werden, wenn die Abdeckung 6 im Bereich der jeweiligen Nut 7 etwas nach Innen gewölbt, also etwas konkav ausgebildet ist, und dadurch in den Randbereichen der Nut 7 Sollbruchlinien zum Ausbrechen der Abdeckung 6 gebildet sind.

Das Werkzeug 1 weist in seinen beiden Arbeitsbereichen 2, 3 einen prisamtischen Querschnitt auf, dessen Breite im wesentlichen der Breite der Nut 7 entspricht. Hierdurch ergibt ich sowohl für den Arbeitsbereich 2 als auch für den Arbeitsbereich 3 beim Ausbrechen der Abdeckung 6 eine gute gute Führung des Werkzeuges 1 innerhalb der jeweiligen Nut 7 des Profilmaterials 8.

Der zweite Arbeitsbereich 3 dient zum Ausbrechen der Abdeckung 6 entlang einer vorbestimmten Länge des Profilmaterials 8. Hierzu weist der zweite Arbeitsbereich 3 einen Schlitz 10 auf, der im wesentlichen parallel zur Längsachse des Werkzeuges 1 gerichtet ist. Die Länge des Schlitzes 10 entspricht der maximalen Länge der herzustellenden Ausbrechung; die lichte Weite des Schlitzes 10 ist etwas größer als die Dicke der Abdeckung 6 im Bereich der Nut 7.

Der Arbeitsbereich 3 weist an seiner Unterseite eine der unteren Begrenzungsfläche 5 des Arbeitsbereiches 2 entsprechende untere Begrenzungsfläche 11 auf, die sich beim Niederdrücken des Arbeitsbereiches 3 auf dem Grund der Nut 7 abstützt und dabei gleichzeitig auf diesem abrollt.

Zum Ausbrechen einer vorbestimmten Länge der Abdeckung 6 wird das Werkzeug 1 von der Stirnseite des Profilmaterials 8 derart in die Nut 7 eingeschoben, daß sich die die Nut 7 überdeckende Abdeckung 6 innerhalb des Schlitzes 10 befindet. Das so in die Nut 7 eingeschobene Werkzeug 1 wird im Bereich seines Arbeitsbereiches 2 in Richtung des Pfeiles der Fig. 2 angehoben, sodaß die Abdeckung 6 spätestens nach mehrfachem Schwenken des Werkzeuges 1 ausbricht.

Um beim Ausbrechen der Abdeckung 6 eventuell anfallende Späne relativ leicht aus der Nut 7 ausbrechen zu können , ist im Arbeitsbereich 3 ein Widerhaken 12 vorgesehen.

## Patentansprüche

1. Werkzeug zum Entfernen der Abdeckung von Nuten an Profilmaterialien zum Aufhebeln der jeweiligen Nut, mit mindestens zwei vorzugsweise im Bereich seiner beiden Enden angeordneten Arbeitsbereichen (2,3), wobei der eine Arbeitsbereich (2) im wesentlichen keilförmig ausgebildet ist, und der andere Arbeitsbereich (3) mit einem zur Längsachse des Werkzeuges (1) im wesentlichen parallel gerichteten Schlitz (10) zum Aufbrechen der Abdeckung versehen ist.

2. Werkzeug nach Anspruch 1, **dadurch gekennzeichnet, daß**
der eine Arbeitsbereich (2) zwei Begrenzungsflächen (4,5) aufweist, wobei die obere Begrenzungsfläche (4) eine im wesentlichen ebene Fläche ist, während die untere Begrenzungsfläche (5) eine konkav gewölbte Fläche ist.

3. Werkzeug nach Anspruch 2, **dadurch gekennzeichnet, daß**
sich an die obere Begrenzungsfläche (4) eine gewölbte Fläche (9) anschließt.

4. Werkzeug nach Anspruch 1, **dadurch gekennzeichnet, daß**
die Länge des Schlitzes (10) im wesentlichen der Länge der herzustellenden Ausbrechung entspricht.

5. Werkzeug nach Anspruch 1, **dadurch gekennzeichnet, daß**
die beiden Arbeitsbereiche (2,3) jeweils einen im wesentlichen prismatischen Querschnitt aufweisen, dessen Breite der Breite der aufzubrechenden Nuten (7) entspricht.

## Claims

1. Tool for removing the covering of grooves on profile materials to lever-open the respective groove, said tool having at least two working areas (2, 3) preferably disposed in the region of its two ends, one working area (2) having a substantially wedge-shaped configuration, and the other working area (3) being provided with a slot (10), which is orientated substantially parallel to the longitudinal axis of the tool (1), for breaking-open the covering.

2. Tool according to claim 1, **characterised in that** one working area (2) has two boundary faces (4, 5), the upper boundary face (4) being a substantially planar face, while the lower boundary face (5) is a concavely curved face.

3. Tool according to claim 2, **characterised in that** a curved face (9) communicates with the upper boundary face (4).

4. Tool according to claim 1, **characterised in that** the length of the slot (10) substantially corresponds to the length of the notch to be produced.

5. Tool according to claim 1, **characterised in that** the two working areas (2, 3) each have a substantially prismatic cross-section, the width of which corresponds to the width of the grooves (7) to be broken-open.

## Revendications

1. Outil pour enlever le revêtement de rainures sur des matériaux de profilé pour raboter la rainure respective avec au moins deux zones de travail (2,3) disposées de préférence dans la région de ses deux extrémités, une zone de travail (2) étant conçue sensiblement en forme de coin et l'autre zone de travail (3) étant pourvue d'une fente (10) orientée sensiblement parallèlement à l'axe longitudinal de l'outil (1) pour l'ouverture de force du revêtement.

2. Outil selon la revendication 1, **caractérisé en ce que** l'une des zones de travail (2) présente deux surfaces de limitation (4, 5), la surface de limitation (4) supérieure étant une surface sensiblement plane, alors que la surface de limitation (5) inférieure est une surface en cuvette.

3. Outil selon la revendication 2, **caractérisé en ce qu'**une surface (9) incurvée fait suite à la surface de limitation (4) supérieure.

4. Outil selon la revendication 1, **caractérisé en ce que** la longueur de la fente (10) correspond sensiblement à la longueur de l'ouverture à préparer.

5. Outil selon la revendication 1, **caractérisé en ce que** les deux zones de travail (2, 3) présentent chacune une section transversale sensiblement prismatique, dont la largeur correspond à la largeur des rainures (7) à ouvrir de force.
